Europäisches Patentamt

European Patent Office

Office européen des brevets

(19)

(11) **EP 0 834 538 B1**

(12) **EUROPEAN PATENT SPECIFICATION**

(45) Date of publication and mention
of the grant of the patent:
**15.12.2004 Bulletin 2004/51**

(51) Int Cl.[7]: **C09D 11/00**
// B41J2/01

(21) Application number: **97917419.0**

(22) Date of filing: **17.04.1997**

(86) International application number:
**PCT/JP1997/001330**

(87) International publication number:
**WO 1997/040109 (30.10.1997 Gazette 1997/46)**

(54) **INK FOR INK JET PRINTING AND METHOD OF PRINTING USING THE SAME**

TINTENSTRAHL-TINTE UND DRUCKVERFAHREN UNTER VERWENDUNG DERSELBEN

ENCRE POUR IMPRESSION A JET D'ENCRE ET PROCEDE D'IMPRESSION DANS LEQUEL
CETTE ENCRE EST UTILISEE

(84) Designated Contracting States:
**AT BE CH DE DK ES FI FR GB GR IE LI LU MC NL
PT SE**

(30) Priority: **19.04.1996 JP 9807096**

(43) Date of publication of application:
**08.04.1998 Bulletin 1998/15**

(73) Proprietor: **GENERAL COMPANY LIMITED
Osaka-shi, Osaka 536-0005 (JP)**

(72) Inventors:
 • **HAYASHI, Hisato General Company Limited
  Osaka 536 (JP)**
 • **ISOBE, Kozo General Company Limited
  Osaka 536 (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(56) References cited:
**EP-A- 0 452 096       EP-A- 0 585 616
JP-A- 6 093 218        JP-A- 8 092 514
JP-A- 8 337 747        JP-A- 51 085 804
JP-A- 57 014 659       JP-A- 58 089 667
JP-A- 62 260 874       US-A- 4 383 859**

Remarks:
The file contains technical information submitted
after the application was filed and not included in this
specification

**Description**

<TECHNICAL FIELD>

The present invention relates to jet printing ink, and a printing method using the same. More particularly, it relates to jet printing ink used in an on-demand type ink-jet printing system which is a thermal-jet system (bubble-jet system) wherein droplets of ink are discharged through a nozzle by momentary heating, and a printing method using the same.

<BACKGROUND TECHNIQUE>

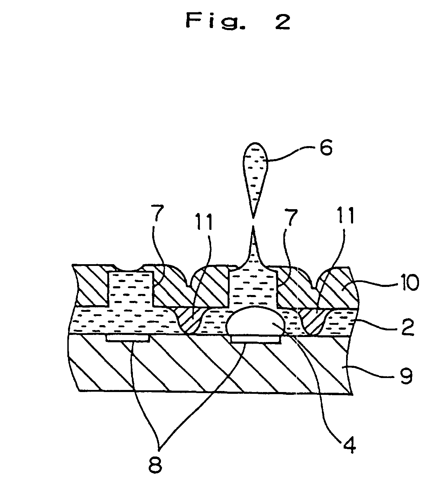

Regarding an ink-jet printing system, an on-demand type has recently been used in place of a conventional continuous type. The on-demand type is a type wherein ink is discharged through a nozzle only at the time of print recording, unlike the continuous type wherein printing is conducted by applying an electric charge or electric field to droplets of ink discharged continuously through a nozzle and spattering droplets of ink on a predetermined position.
As jet printing ink, those prepared by dissolving or dispersing a dye or pigment in a solvent such as water are generally used. However, on-demand jet printing ink has a feature that clogging of the nozzle is liable to arise compared with a continuous type because discharge and stop of ink are frequently repeated. Therefore, the on-demand type ink requires more severe conditions in physical properties (e.g. viscosity, etc.) and tolerance of various impurities than the continuous type ink does.
The on-demand ink-jet printing system is classified roughly into a so-called piezoelectric system using a piezoelectric element and a so-called thermal-jet system (bubble-jet system). Among them, the thermal-jet system has various advantages, for example, a printer can be miniaturized and an ink discharge amount is small and, furthermore, a high-density image with little blur can be obtained and speed-up of printing can be realized and, therefore, it has attracted special interest among the on-demand type.
According to the thermal-jet system, printing is conducted by momentarily heating ink on a heating head (heater) to form bubbles, thereby discharging ink.

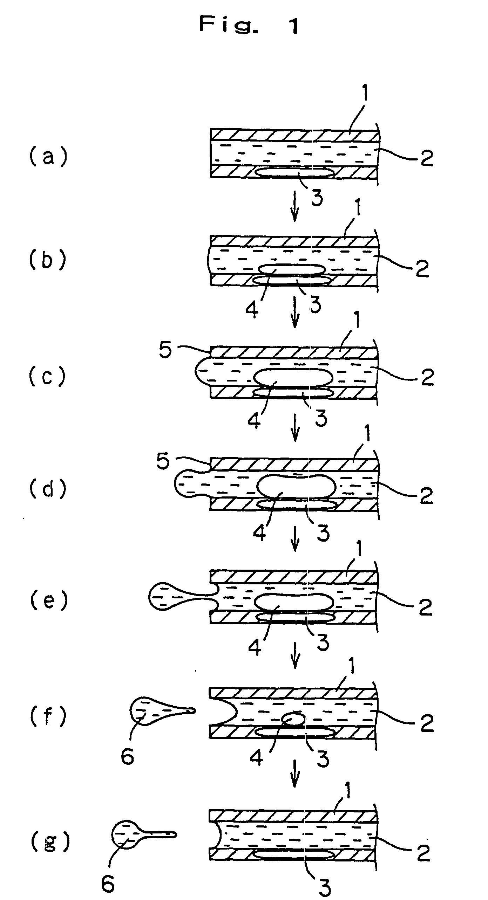

Fig. 1 illustrates an ink discharge principle of the thermal-jet system. As shown in Fig. 1 (a), a nozzle 1 is filled with ink 2 and, under this state, rapid heating of a heating head 3 is initiated. As a result, bubbles 4 are produced on the surface of the heating head 3 (Fig. 1 (b)). Bubbles further grow and ink is extruded out through a discharge orifice 5 by the pressure of the bubbles (Fig. 1 (c)), and droplets 6 of ink 2 are at last discharged (Fig. 1 (d)-(g)). Since charging of an electricity to the heating head 3 is terminated the moment ink 2 is discharged, bubbles 4 spontaneously shrinks (Fig. 1 (e)-(f)) to disappear, followed by being on standby for reheating (Fig. 1 (g)).
The surface of the heating head 3 is momentarily heated to about 1000°C. The heating time is normally from about 3 to 5 μs (microseconds). That is, in the thermal-jet system, the time required to print one dot due to discharge of ink droplets 6 is about several μs.
In the system shown in Fig. 1, the heating head 3 is provided in the vertical direction relative to the axial direction of the nozzle 1.
On the other hand, in the other system shown in Fig. 2, a heating head 8 is provided at the back of a nozzle 7. According to this system, as shown in Fig. 2, ink 2 is filled between a substrate 9 and an orifice plate 10 or in the nozzle 7, and ink 2 is discharged through the nozzle in the same manner as described above. The respective nozzles 7, 7 are separated by a barrier 11.
If ink 2 used in a thermal-jet system printer as shown in Fig. 1 or Fig. 2 contains a large amount of impurities, foreign matters are liable to adhere on the surface of the heating heads 3, 8 to cause clogging of the nozzles 1, 7 and printing failures. Therefore, it is required for ink used in the thermal-jet system to contain little impurities. Examples of the impurities include multivalent metal ions contained in ink (e.g. aluminum ion, calcium ion, iron ion, magnesium ion, manganese ion). A phenomenon, wherein these impurities are insolubilized and adhered on the surface of the heating head, is referred to as "kogation". When such kogation arises, the redicharge characteristics of ink become inferior. Such a problem arise particularly in the on-demand type wherein the retention time of ink in the nozzle is long. Therefore, it is required to reduce the content of the multivalent metal ions in ink (Japanese Patent Publication Nos. 3-48950 to 48953).
However, it is difficult to reduce the content of the impurities in ink, particularly multivalent metal ions, and a great deal of time and cost are required to purification of ink. Therefore, ink itself becomes expensive. Since almost all of colorants contain multivalent metal ions, high technique is required to removal of the multivalent metal ions. Therefore, when using a colorant containing a small amount of the multivalent metal ions, an usable colorant is limited. Accordingly, a desired color tone can not be obtained sometimes in case of full-color ink.
EP 0 585 616 A1 discloses an ink containing a recording agent, a liquid medium for dissolving or dispersing said recording agent and 0.01 to 50 ppm of a chelating agent based on the total weight of the ink. Said ink may be used for ink-jet recording, especially for use in a method to eject ink droplets by applying thermal energy to the ink.

<SUMMARY OF THE INVENTION>

It is a main object of the present invention to provide jet printing ink which is suitable for use in an on-demand thermal-jet printing system, because it can prevent formation of insoluble matters derived from metal ions to be adhered on the surface of a heating head even if a large amount of metal ions are contained, and a printing method using the same.

It is another object of the present invention to provide on-demand jet printing ink wherein the kind and amount of colorants used are not limited, and a printing method using the same.

It is still another object of the present invention to provide on-demand jet printing ink which is superior in various characteristics such as storability, redischarge stability, etc., and a printing method using the same.

In order to solve the above problems, the present inventors have intensively studied and found the following new fact. That is, when masking is conducted by linking metal ions in ink with a chelating agent, the insolubilized metal ions are prevented from adhering on the surface of a heating head and, therefore, there can be provided ink which is superior in various characteristics such as storability, redischarge stability, and is optimum for an on-demand ink-jet printing system. Thus, the present invention has been accomplished.

That is, jet printing ink of the present invention is used in an on-demand ink-jet printing system wherein droplets of ink are discharged through a nozzle by heating, and comprises (i) a colorant, (ii) a chelating agent which links with a metal ion to form a water-soluble complex (chelate) and (iii) water or a mixture of water and a water-soluble organic solvent, wherein the chelating agent is contained in the amount enough to convert the metal ion in ink into the complex and the pH is from 6 to 10.

Consequently, according to the present invention, there can be solved such a problem that insoluble matters derived from metal ions adheres on the surface of the heating head to deteriorate the redischarge stability of ink, simply and certainly, without using complicated purification means.

Accordingly, according to the present invention, even in case of a colorant containing a large amount of metal ions, its use is not limited. Therefore, it becomes possible to use various water-soluble dyes and pigments as the colorant. The complex to be formed is water-soluble and is stable at the time of heating.

In order to prevent clogging of the nozzle, the pH value of ink is preferably within the range from 6 to 10. When the pH value is less than 6, the complex formed by the chelating agent is decomposed to evolve metal ions, and since ink becomes an acidic liquid, there is a fear of arising problems such as corrosion of a metal plate (particularly heating plate) used in an ink-jet nozzle and discoloration of the colorant (particularly alkaline dye). On the other hand, when the pH value exceeds 10, like the case where the pH value is less than 6, there is a fear of arising problems such as evolution of metal ions due to the the decomposition of the complex formed by the chelating agent, corrosion of the metal plate (particularly heating plate) used in the nozzle and discoloration of the colorant (particularly acid dye). In order to certainly prevent these problems from arising, the pH value of ink is preferably from 7 to 9.

Since ink of the present invention is heated by the heating head at the time of recording, it is preferred that the complex is superior in heat stability. Specifically, the pyrolysis temperature of the complex is preferably not less than 300°C. The term "pyrolysis temperature" used herein means the temperature where the complex having intrinsically high solubility loses the solubility and is converted into an insoluble substance. The reason why the pyrolysis temperature is adjusted to not less than 300°C is as follows. That is, as described above, the surface of the heating head 3 is heated to about 1000°C, but the heating critical temperature of water is about 300°C when ink is aqueous ink using water as a solvent. The heating critical temperature of the colorant, additives and solvent other than water, which are contained in ink, is not more than 300°C. Accordingly, the ink is not heated to 300°C or more.

<BRIEF DESCRIPTION OF THE DRAWINGS>

Fig. 1 is a flow chart for explaining an ink discharge principle of a thermal-jet system.
Fig. 2 is a schematic sectional view illustrating a thermal-jet system which is different from that of Fig. 1.

<BEST MODE FOR CARRYING OUT THE INVENTION>

As the chelating agent in the present invention, there can be used any one which is water-soluble and is superior in heat stability, and links with metal ions to inhibit the reactivity of the metal ions. Particularly, those forming a complex, which is stable to heat from the heating head, is preferable.

That is, regarding the complex formed by linking the chelating agent with metal ions, the pyrolysis rate of the complex when ink is heated under the conditions of a heater surface maximum temperature of 700°C, a period of 2 kHz (this means that heat generation is repeated every 1/2000 second) and a heating time of 1 second is preferably not more than 24% in order to prevent the insoluble matter derived from metal ions from adhering on the surface of the heating head. In case of a normal thermal ink-jet printer, printing is conducted under the conditions that the heater surface maximum temperature of the heating head is about 1000°C and the heating period is 20 kHz (this means that heat generation is repeated every 1/2000 second). Therefore, it means that the adhesion of insoluble matters on the heating head can be prevented if the metal complex is stable to heating under severe conditions (e.g. 700°C, period of 2 kHz, as described above) compared with an actual printer.

The measurement of the pyrolysis rate of the complex is conducted by the method as described in the evaluation test described hereinafter. That is, a predetermined amount of ink is heated under the conditions of a heater surface maximum temperature of 700°C, a period of 2 kHz and a heating time of 1 second. Then, the amount of metal ions converted into insoluble matters by heating is determined by subtracting the concentration (ppm) of metal ions in ink after heating from the concentration (ppm) of metal ions in ink before heating. When the resulting amount is divided by the concentration (ppm) of metal ions in ink before heating, the pyrolysis rate of the complex can be determined. The amount of metal ions in ink can be measured by atomic absorption spectrometry.

Typical examples of the metal ion capable of causing the adhesion on the heating head include calcium, iron, magnesium, silicon and manganese.

The pyrolysis rate of the complex formed by linking each metal ion with the chelating agent is preferably not more than 4.0% when ink is heated under the conditions of a heater surface maximum temperature of 700°C, a period of 2 kHz and a heating time of 1 second. It is considered that, when the pyrolysis rate is not more than 4.0%, the above-described adhesion on the heating head does not arise. That is, assuming all calcium ions are converted into a complex by adding an excess amount of a chelating agent to ink wherein calcium ions are contained at the concentration of 1000 ppm, the adhesion of the insoluble matter on the heating head does not arise when the pyrolysis rate is not more than 4.0% even if some complex is pyrolytically decomposed by pyrolysis at the time of printing.

In case that ink contains various metal ions, when ink is heated under the conditions of a heater surface maximum temperature of 700°C, a period of 2 kHz and a heating time of 1 second, the total pyrolysis rate of each metal ion is preferably not more than 24%, more preferably not more than 10%.

Examples of the chelating agent include polyaminocarboxylic acids such as EDTA (ethylenediaminetetraacetic acid), NTA (nitrilotriacetic acid), UDA (uracildiacetic acid) and 1,10-phenanthroline; oxycarboxylic acids such as glycolic acid, glyceric acid, lactic acid, malic acid, tartaric acid, citric acid, mandelic acid and salicylic acid; condensed phosphoric acids such as polyphosphoric acid; or a salt thereof. Among them, use of EDTA or a salt thereof (e.g., alkaline salt) is particularly preferable in order to form a water-soluble and stable complex by linking with metal ions.

The amount of the chelating agent to be added is an amount enough to convert metal ions in ink into a complex. Generally speaking, the chelating agent may be contained in the amount larger than the stoichiometric amount required relative to the total amount of metal ions. Since some jet printing ink, which is not sufficiently purified, contains metal ions in the amount exceeding several hundreds ppm, the chelating agent may be added in the equimolar amount or more. That is, the amount of the chelating agent may be from 1 to 4 mol, preferably from 1 to 2 mol, per mol of metal ions contained in ink.

The concentration of the chelating agent added in ink is not more than 15000 ppm, considering the discharge characteristics of ink.

The colorant is not specifically limited, and there can be used metal pigments whose use in the ink-jet system using the heating head have hitherto been considered to be difficult, in addition to various pigments and dyes which have hitherto been known. In that case, the colorant may be those prepared by filtering an appropriately purified one to remove an insoluble substance without a precise purification operation. Consequently, the production of jet printing ink can be easily conducted at low price, since, in the present invention, insoluble substances (e.g. colloid of metal oxide or metal hydroxide) is not further produced.

Examples of the pigment, which can be used in the present invention, for monochrome (black-and-white) printing include carbon blacks such as furnace black, lamp black, acetylene black and channel black; metals or metal oxides, such as copper, iron and titanium oxide; and organic pigments such as ortho-nitroaniline black. As a pigment for color printing, for example, there can be used toluidine red, permanent carmine FB, first yellow AAA, disazo orange PMP, lake red C, brilliant carmine 6B, phthalocyanine blue, quinacridone red, dioxane violet, victoria pure blue, alkali blue toner, fast yellow 10G, disazo yellow AAMX, disazo yellow AAOT, disazo yellow AAOA, yellow iron oxide, disazo yellow HR, ortho-nitroaniline orange, dinitroaniline orange, vulcan orange, toluidine red, chlorinated para red, brilliant fast scarlet, naphthol red 23, pyrazolone red, barium red 2B, calcium red 2B, strontium red 2B, manganese red 2B, barium soam red, pigment scarlet red 3B lake, lake bordo 10B, anthosine 3B lake, anthosine 5B lake, rhodamine 6G, eosine lake, red iron oxide, faftol red FCR, rhodamine B lake, methyl violet lake, dioxazine violet, basic blue 5B lake, basic blue 6G lake, fast sky blue, alkali blue T toner, peacock blue lake, prussian blue, ultramarine, reflex blue 2G, reflex blue R, brilliant green lake, diamond green thiofravine lake, phthalocyanine green G, green gold, phthalocyanine green Y, iron oxide powder, rust powder, zinc white, titanium oxide, calcium oxide, clay, barium sulfate, alumina white, aluminum powder, bronze powder, daylight fluorescent pigment, pearlescent pigment, naphthol carmine FB, naphthol red M, permanent carmine FB, fast yellow G, disazo yellow AAA, disazo orange PMP, lake red C, dioxane violet, alkali blue, and processed pigments prepared by treating the pigment surface with a resin, such as graft carbon. As a pigment used, those wherein the particle diameter is adjusted to not more than 5 μm, preferably not more than 0.1 μm, by pulverization are suitable in order to prevent flogging of the nozzle.

Examples of the water-soluble dye, which can be used in the present invention, include acridine dye, aniline black dye, anthraquinone dye, azine dye, azomethine dye, benzoquinone dye, naphthoquinone dye, indigoid dye, indophenol dye, indoaniline dye, indamine dye, leuco dye, naphthalimide dye, nigrosine dye, induline dye, nitro dye, nitroso dye, oxazine dye, dioxazine dye, oxidation dye, phthalocyanine dye, polymethine dye, quinophthalone dye, triacrylmethane dye, diacrylmethane dye, thiazine dye, thiazole dye, xanthene dye, and cyane dye.

The amount of the colorant to be added is from 1 to 30% by weight, preferably from 3 to 12% by weight, based on the total weight of ink.

In the present invention, as the solvent in which the colorant is dissolved, for example, water (preferably ultrapure water) is used, but those containing multivalent metal ions can also be used.

Water can be used alone or in combination with a water-soluble organic solvent.

Examples of the water-soluble organic solvent include $C_1$- $C_5$ alkyl alcohols such as methyl alcohol, ethyl alcohol, n-propyl alcohol, isopropyl alcohol, n-butyl alcohol, sec-butyl alcohol, tert-butyl alcohol, isobutyl alcohol; amides such as dimethylformamide, dimethylacetamide; ketones or ketone alcohols, such as acetone, diacetone alcohol; ethers such as dioxane; polyalkylene glycols such as polyethylene glycol, polypropylene glycol; alkylene glycols whose alkylene group has 1 to 6 carbon atoms, such as ethylene glycol, propylene glycol, butylene glycol, triethylene glycol, 1,2,6-hexanetriol, thiodiglycol, hexylene glycol, diethylene glycol; glycerine; lower alkyl ethers of polyhydric alcohol, such as ethylene glycol monomethyl ether, ethylene glycol monoethyl ether, diethylene glycol monomethyl ether, diethylene glycol monoethyl ether, triethylene glycol monomethyl ether, triethylene glycol monoethyl ether; lower dialkyl ethers of polyhydric alcohol, such as triethylene glycol dimethyl ether triethylene glycol diethyl ether, tetraegtylene glycol dimethyl ether, tetraethylene glycol diethyl ether; sulfolane, N-methyl-2-pyrrolidone and 1,3-dimethyl-2-imidazolidinone.

The amount of the water-soluble organic solvent contained in ink is generally from 0 to 80% by weight, preferably from 2 to 80% by weight, more preferably from 3 to 70% by weight, particularly from 4 to 60% by weight, based on the total weight of ink. The amount of water used as a preferable liquid medium is generally not less than 10% by weight, preferably from 10 to 97.5% by weight, more preferably from 35 to 97.5% by weight, particularly from 45 to 97.5% by weight, based on the total weight of ink. When the amount of the water-soluble organic solvent in ink exceeds 80% by weight or the amount of water in ink is less than 10% by weight, a large amount of low-volatile organic solvent is remained in the formed recorded image and a problem such as blur of the image, etc. arises.

In addition to the above-described components, if necessary, pH adjustors, viscosity adjustors, surface tension adjustors, binders, humectants, mildewproofing agents, etc. can be appropriately contained. Examples of the pH adjustor include various organic amines such as diethanolamine, triethanolamine; and inorganic alkali agents such as hydroxides of alkali metals (e.g. sodium hydroxide, lithium hydroxide, potassium hydroxide).

The pH of ink of the present invention is from 6.0 to 10.0, preferably from 7 to 9, in order to prevent corrosion of the heating head and to enhance the stability of the colorant, thereby preventing it from precipitating.

The viscosity measured at 25°C by a R type viscometer of ink of the present invention is from 1 to 20 mP·s, preferably from 1 to 15 mP·s, more preferably from 1 to 5 mP·s. The surface tension is not less than 20 dyn/cm, preferably from 20 to 65 dyn/cm, more preferably from 30 to 65 dyn/cm. The density of ink of the present invention is preferably about 1 g/cm$^3$.

Ink of the present invention can be suitably used in a printing method of an on-demand type ink-jet printing system, particularly thermal-jet system (bubble-jet system), as shown in Fig. 1 and Fig. 2. That is, according to this printing method, a nozzle is filled with ink and the surface of a heating head is monetarily heated to form a bubble in the nozzle. Then, a droplet of ink is discharged through the nozzle by the pressure of the bubble, thereby recording on a recording paper.

By using ink of the present invention described in this printing method, it is possible to effectively prevent insoluble matters derived from metal ions from adhering on the surface of the heating head. Therefore, the redischarge stability of ink is superior and clogging of the nozzle and printing failures are prevented from arising.

<INDUSTRIAL PRACTICABILITY>>

As described above, according to the present invention, since a chelating agent reacts with multivalent metal ion to form a water-soluble and stable complex, the amount of insoluble matters derived from the metal ions adhered on the surface of a heating head is remarkably reduced. Accordingly, it is possible to prevent clogging of the nozzle

**EP 0 834 538 B1**

and printing failures from arising.

A change in pH with the addition of the above-described chelating agent is small and a change in color tone hardly arises and, furthermore, the redischarge stability and storage stability are excellent. Accordingly, ink of the present invention is suitable for use in an on-demand type ink-jet printing system wherein droplet of ink is discharged through a nozzle by heating.

According to the present invention, it is not necessary to precisely remove or control the amount of a metal contained in a solvent, a colorant and other additives as an ink component. Accordingly, jet printing ink can be easily produced at low price.

<EXAMPLES>

Examples 1 to 6

According to the formulation shown in Table 1, respective jet printing inks were prepared. Inks of the respective Examples are those obtained by changing the amount of a 1000 ppm solution of a multivalent metal (e.g. Fe, Mg, Ca, Mn, Si) with keeping the kind and amount of ink components such as colorant (dye or pigment), water-soluble solvent, etc. to change the concentration of the metal in ink, and adding a chelating agent (EDTA·2Na) in an equimolar amount of the metal.

The dye used in Examples 1 to 5 is a black azo dye, and was used in the form of an aqueous liquid having a solid content of 23%. The pigment dispersion used in Example 6 is a dispersion (solid content: 20%) of a carbon black pigment (particle diameter: 0.05 μm) in water. As the surface tension adjustor, a nonionic surfactant (ethylene oxide adduct of acetylene glycol) was used. As the mildewproofing agent, a methylol mixture was used.

The 1000 ppm solution of each metal element and pH adjustor shown in Table 1 were prepared in the following manner.

Fe: A solution was prepared by dissolving $FeCl_3 \cdot 6H_2O$ in ultrapure water so that the concentration of Fe becomes 1000 ppm.

Mg: A solution was prepared by dissolving $MgCl_3 \cdot 6H_2O$ in ultrapure water so that the concentration of Mg becomes 1000 ppm.

Ca: A solution was prepared by dissolving $CaCl_2$ in ultrapure water so that the concentration of Ca becomes 1000 ppm.

Mn: A solution was prepared by dissolving $MnCl_2 \cdot 4H_2O$ in ultrapure water so that the concentration of Mn becomes 1000 ppm.

Si: A solution was prepared by dissolving $Na_2SiO_3$ in ultrapure water so that the concentration of Si becomes 1000 ppm.

pH adjustor: It was prepared by mixing potassium dihydrogenphosphate (0.102 g), an aqueous 0.1 mol/l NaOH solution (7.02 g) and ultrapure water (7.878 g) with stirring.

With respect to the resulting ink, the pH value at 25°C, resistance value, surface tension and viscosity were measured. The resistance value was measured by a CM-40S conductivity meter (manufactured by Toa Denpa Co.). The surface tension was measured by Digital Tensiometer K10ST (manufactured by Kruss Co.). The viscosity was measured by a R type viscometer (manufactured by Toki Sangyo Co.). The resulting values of physical properties are also shown in Table 1.

Comparative Example 1

According to the same manner as that described in Example 3 except for adding no EDTA·2Na, ink was prepared so that the concentration of each metal added becomes 20 ppm. The formulation and values of physical properties are shown in Table 1.

Comparative Example 2

According to the same manner as that described in Example 3 except for adjusting the pH value of ink to about 10, ink having the concentration of each metal of 20 ppm was produced by adding a predetermined amount of EDTA·2Na. The formulation and values of physical properties are shown in Table 1. In Table 1, the unit of the amount of each component is "parts by weight".

## Table 1

|  | Example 1 | Example 2 | Example 3 | Example 4 |
|---|---|---|---|---|
| Aqueous dye liquid | 37.60 | 37.60 | 37.60 | 37.60 |
| Pigment dispersion | - | - | - | - |
| Glycerin | 21.00 | 21.00 | 21.00 | 21.00 |
| Isopropyl alcohol | 15.00 | 15.00 | 15.00 | 15.00 |
| Surface tension adjustor | 0.12 | 0.12 | 0.12 | 0.12 |
| Mildewproofing agent | 0.30 | 0.30 | 0.30 | 0.30 |
| pH adjustor | 15.00 | 15.00 | 15.00 | 15.00 |
| Fe 1000 ppm solution | 1.80 | 3.00 | 6.00 | 12.00 |
| Mg 1000 ppm solution | 1.80 | 3.00 | 6.00 | 12.00 |
| Ca 1000 ppm solution | 1.80 | 3.00 | 6.00 | 12.00 |
| Mn 1000 ppm solution | 1.80 | 3.00 | 6.00 | 12.00 |
| Si 1000 ppm solution | 1.80 | 3.00 | 6.00 | 12.00 |
| EDTA·2Na | 0.09 | 0.15 | 0.30 | 0.60 |
| 1 mol/l NaOH aq. solution | - | - | - | - |
| 0.1 mol/l NaOH aq. solution | - | - | - | - |
| Ultrapure water | 216.89 | 195.83 | 180.68 | 150.38 |
| pH (25°C) | 7.98 | 7.95 | 7.91 | 7.85 |
| Resistance value ($\Omega \cdot cm$) | 363.00 | 363.00 | 324.00 | 273.00 |
| Surface tension (mN/m) | 37.60 | 37.50 | 37.30 | 37.40 |
| Viscosity (mPa·s) | 1.71 | 1.72 | 1.70 | 1.71 |
| Concentration (ppm) of each metal added | 6.00 | 10.00 | 20.00 | 40.00 |
| Total concentration (ppm) of each metal | 30.00 | 50.00 | 100.00 | 200.00 |

EP 0 834 538 B1

Table 1 (continued)

| | Example 5 | Example 6 | Comp. Ex.1 | Comp. Ex.2 |
|---|---|---|---|---|
| Aqueous dye liquid | 37.60 | - | 37.60 | 37.60 |
| Pigment dispersion | - | 43.20 | - | - |
| Glycerin | 21.00 | 21.00 | 21.00 | 21.00 |
| Isopropyl alcohol | 15.00 | 15.00 | 15.00 | 15.00 |
| Surface tension adjustor | 0.12 | 0.12 | 0.12 | 0.12 |
| Mildewproofing agent | 0.30 | 0.30 | 0.30 | 0.30 |
| pH adjustor | 15.00 | 15.00 | 15.00 | 15.00 |
| Fe 1000 ppm solution | 24.00 | 6.00 | 6.00 | 6.00 |
| Mg 1000 ppm solution | 24.00 | 6.00 | 6.00 | 6.00 |
| Ca 1000 ppm solution | 24.00 | 6.00 | 6.00 | 6.00 |
| Mn 1000 ppm solution | 24.00 | 6.00 | 6.00 | 6.00 |
| Si 1000 ppm solution | 24.00 | 6.00 | 6.00 | 6.00 |
| EDTA·2Na | 1.20 | 0.30 | - | 0.30 |
| 1 mol/l NaOH aq. solution | - | - | - | 25.80 |
| 0.1 mol/l NaOH aq. solution | - | - | - | 21.20 |
| Ultrapure water | 89.78 | 175.08 | 180.98 | 133.68 |
| pH (25°C) | 7.66 | 6.81 | 7.94 | 10.30 |
| Resistance value ($\Omega \cdot cm$) | 214.00 | 757.00 | 353.00 | 191.00 |
| Surface tension (mN/m) | 37.60 | 38.60 | 37.60 | 37.60 |
| Viscosity (mPa·s) | 1.71 | 1.52 | 1.70 | 1.71 |
| Concentration (ppm) of each metal added | 80.00 | 20.00 | 20.00 | 20.00 |
| Total concentration (ppm) of each metal | 400.00 | 100.00 | 100.00 | 100.00 |

Evaluation test 1

Jet printing inks (0.5 ml each) obtained in Examples 1 to 6 and Comparative Examples 1 and 2 were heated under the conditions of a heating surface maximum temperature of 700°C, a period of 2 kHz and a heating time of 1 second, using a pulse type heating surface heater (heating area: 0.1 mm$^2$). After heating, the concentration (ppm) of each metal ion in ink was measured by an atomic absorption spectrometer ("AA6400", manufactured by SHIMADZU CORPORATION). Then, the pyrolysis rate H(%) was determined by the following equation.

$$H = [(I_1 - I_2)/I_1] \times 100$$

$I_1$: Concentration of metal ions in ink before heating
$I_2$: Concentration of metal ions in ink after heating

The measurement results are shown in Table 2.

EP 0 834 538 B1

Table 2

| Metal ion | Example 1 | | | Example 2 | | |
|---|---|---|---|---|---|---|
| | Before heating(ppm) | After heating(ppm) | Pyrolysis rate(%) | Before heating(ppm) | After heating(ppm) | Pyrolysis rate(%) |
| Fe | 6.00 | 6.00 | 0 | 10.00 | 10.00 | 0 |
| Mg | 6.00 | 6.00 | 0 | 10.00 | 10.00 | 0 |
| Ca | 6.00 | 6.00 | 0 | 10.00 | 10.00 | 0 |
| Mn | 6.00 | 6.00 | 0 | 10.00 | 10.00 | 0 |
| Si | 6.00 | 6.00 | 0 | 10.00 | 10.00 | 0 |
| Total | 30.00 | 30.00 | 0 | 50.00 | 50.00 | 0 |

Table 2 (continued)

| Metal ion | Example 3 | | | Example 4 | | |
|---|---|---|---|---|---|---|
| | Before heating(ppm) | After heating(ppm) | Pyrolysis rate(%) | Before heating(ppm) | After heating(ppm) | Pyrolysis rate(%) |
| Fe | 20.00 | 20.00 | 0 | 40.00 | 39.99 | 0.02 |
| Mg | 20.00 | 20.00 | 0 | 40.00 | 40.00 | 0 |
| Ca | 20.00 | 19.99 | 0.05 | 40.00 | 39.99 | 0.02 |
| Mn | 20.00 | 19.99 | 0.05 | 40.00 | 40.00 | 0 |
| Si | 20.00 | 20.00 | 0 | 40.00 | 40.00 | 0 |
| Total | 100.00 | 99.98 | 0.02 | 200.00 | 199.98 | 0.01 |

**Table 2 (continued)**

| Metal ion | Example 5 | | | Example 6 | | |
|---|---|---|---|---|---|---|
| | Before heating(ppm) | After heating(ppm) | Pyrolysis rate(%) | Before heating(ppm) | After heating(ppm) | Pyrolysis rate(%) |
| Fe | 80.00 | 79.99 | 0.01 | 20.00 | 20.00 | 0 |
| Mg | 80.00 | 79.98 | 0.02 | 20.00 | 20.00 | 0 |
| Ca | 80.00 | 79.99 | 0.01 | 20.00 | 20.00 | 0 |
| Mn | 80.00 | 80.00 | 0 | 20.00 | 20.00 | 0 |
| Si | 80.00 | 80.00 | 0 | 20.00 | 20.00 | 0 |
| Total | 400.00 | 399.96 | 0.01 | 100.00 | 100.00 | 0 |

**Table 2 (continued)**

| Metal ion | Comparative Example 1 | | | Comparative Example 2 | | |
|---|---|---|---|---|---|---|
| | Before heating(ppm) | After heating(ppm) | Pyrolysis rate(%) | Before heating(ppm) | After heating(ppm) | Pyrolysis rate(%) |
| Fe | 20.00 | 14.29 | 28.55 | 20.00 | 17.32 | 13.40 |
| Mg | 20.00 | 14.25 | 28.75 | 20.00 | 17.63 | 11.85 |
| Ca | 20.00 | 10.66 | 46.70 | 20.00 | 14.39 | 28.05 |
| Mn | 20.00 | 14.52 | 27.40 | 20.00 | 18.36 | 8.20 |
| Si | 20.00 | 14.99 | 25.05 | 20.00 | 19.11 | 4.45 |
| Total | 100.00 | 68.70 | 31.30 | 100.00 | 86.81 | 13.19 |

As is apparent from Table 2, in Examples 1 to 6, since the pyrolysis rate of each metal ion is smaller than the detection limit of the atomic absorption spectrometer used, little insoluble matters are produced and, therefore, the complex in ink is stable. To the contrary, in Comparative Example 1 wherein no chelating agent is contained, the pyrolysis rate of each metal ion was high.

On the other hand, as is apparent from a comparison between Example 3 and Comparative Example 2, when the pH of ink is adjusted to 10 or more, Fe, Mn and Ca are easily insolubilized, particularly.


Evaluation test 2

Using inks obtained in Examples 1 to 6 and Comparative Examples 1 to 2, printing was conducted according to an ink-jet system. A printer used is Canon BJ-220 JCII (manufactured by Canon Co.) employing a bubble-jet system. An ink cartridge used is Canon BC-02 (manufactured by Canon Co.). As a paper for evaluation, a XEROX p paper (manufactured by Xerox Co.) was used. The evaluation test was conducted at room temperature.

The evaluation method is as follows. That is, the above ink cartridge was filled with about 20 ml of ink, and printing was repeated using the above printer. Then, the state of the resulting printed image was visually observed and, at the same time, the state of a nozzle was examined by observing a nozzle check pattern. When ink is consumed, the cartridge is filled again with about 20 ml of ink and the same evaluation was repeatedly conducted. This filling operation was conducted five times, and the first filling, second filling, third filling, fourth filling and fifth filling are referred to as "refill first time", "refill second time", "refill third time", "refill fourth time" and "refill fifth time", respectively.

As a result, regarding Examples 1 to 4 and Example 6, the state of printing up to the refill fifth time is satisfactory and clogging of the nozzle did not arise. Regarding Example 5, no problem arise up to the refill third time, but slight omission of ink (omission of print) and clogging of the nozzle slightly arose, sometimes. At this time, when a cleaning operation of the nozzle in the printer was conducted, these failures were solved.

Regarding Comparative Example 1 and Comparative Example 2, considerable weakening of the print arises and, therefore, it was judged that they are not suitable for practical use. These failures were not solved even if a cleaning operation of the nozzle in the printer was conducted.

These test results are shown in Table 3.

EP 0 834 538 B1

<u>Table 3</u>

| | Example 1 | Example 2 | Example 3 | Example 4 |
|---|---|---|---|---|
| Refill first time | Good | Good | Good | Good |
| Refill second time | Good | Good | Good | Good |
| Refill third time | Good | Good | Good | Good |
| Refill fourth time | Good | Good | Good | Good |
| Refill fifth time | Good | Good | Good | Good |
| Amount of each metal added | 6 ppm | 10 ppm | 20 ppm | 40 ppm |
| Remark | Dye ink | Dye ink | Dye ink | Dye ink |

Table 3 (continued)

| | Example 5 | Example 6 | Comparative Example 1 | Comparative Example 2 |
|---|---|---|---|---|
| Refill first time | Good | Good | *1 | *1 |
| Refill second time | Good | Good | *2 | *2 |
| Refill third time | Good | Good | - | - |
| Refill fourth time | *3 | Good | - | - |
| Refill fifth time | *4 | Good | - | - |
| Amount of each metal added | 80 ppm | 20 ppm | 20 ppm | 20 ppm |
| Remark | Dye ink | Pigment ink | *5 | *6 |

*1: Omission of ink often arose and cloggings of a nozzle often arose.

*2: Further evaluation was stopped.

*3: A clogging of a nozzle was once confirmed.

*4: Cloggings of a nozzle were confirmed three times, and omission of ink often arose.

*5: Chelating agent was not added.

*6: Ink of pH 10.3

As is apparent from Table 3, even if a specific metal is contained, adhesion of insoluble matters on a heating head does not arise because of the addition of a chelating agent. Accordingly, clogging of the nozzle is prevented and satisfactory printing can be conducted for a long period of time.

**Claims**

1. Ink comprising: (i) a colorant, (ii) a chelating agent which links with a metal ion to form a water-soluble complex and (iii) water or a mixture of water and a water-soluble organic solvent, wherein the chelating agent is contained in an amount of 1 to 4 mol per mol of metal ions contained in the ink, and the pH is from 6 to 10.

2. Ink according to claim 1, wherein the colorant is a water-soluble dye or pigment.

3. Ink according to claim 1 or 2, wherein the temperature, where the water-soluble complex loses solubility and is converted into an insoluble substance is not less than 300°C.

4. Ink according to any of claims 1 to 3, wherein the rate of conversion of the water-soluble complex into an insoluble substance is not more than 24 % in case of heating under the conditions of a heating surface maximum temperature of 700°C, a period of 2 kHz and a heating time of 1 second.

5. Ink according to claim 4, wherein the rate of conversion is not more than 10 %.

6. Ink according to any of claims 1 to 5, wherein the rate of conversion of the water-soluble complex, formed by linking the chelating agent with a calcium ion, into an insoluble substance is not more than 4.0 % in case of heating under the conditions of a heating surface maximum temperature of 700°C, a period of 2 kHz and a heating time of 1 second.

7. Ink according to any of claims 1 to 5, wherein the rate of conversion of the water-soluble complex, formed by linking the chelating agent with an iron ion, into an insoluble substance is not more than 4.0 % in case of heating under the conditions of a heating surface maximum temperature of 700°C, a period of two kHz and a heating time of 1 second.

8. Ink according to any of claims 1 to 5, wherein the rate of conversion of the water-soluble complex, formed by linking the chelating agent with a magnesium ion, into an insoluble substance is not more than 4.0 % in case of heating under the condition of a heating surface maximum temperature of 700°C, a period of 2 kHz and a heating time of 1 second.

9. Ink according to any of claims 1 to 5, wherein the rate of conversion of the water-soluble complex formed by linking the chelating agent with a silicon ion, into an insoluble substance is not more than 4.0 % in case of heating under the conditions of a heating surface maximum temperature of 700°C, a period of 2 kHz and a heating time of 1 second.

10. Ink according to any of claims 1 to 5, wherein the rate of conversion of the water-soluble complex, formed by linking the chelating agent with a manganese ion, into an insoluble substance is not more than 4.0 % in case of heating under the conditions of a heating surface maximum temperature of 700°C, a period 2 kHz and a heating time of 1 second.

11. Ink according to any of claims 1 to 10, wherein the chelating agent is at least one selected from the group consisting of ethylenediaminetetraacetic acid, nitrilotriacetic acid, uracildiacetic acid, 1,10-phenanthroline, glycolic acid, glyceric acid, lactic acid, tartaric acid, citric acid, mandelic acid, salicylic acid and polyphosphoric acid, or a salt thereof.

12. Ink according to claim 11, wherein the chelating agent is ethylenediaminetetraacetic acid or a salt thereof.

13. A printing method applicable to an on-demand type ink-jet system, which comprises filling a nozzle with an ink according to any of claims 1 to 12; momentarily heating the surface of a heating head to form bubbles in the nozzle; and discharging droplets of ink by the pressure of the bubbles.

14. Use of an ink according to any of claims 1 to 12 in an on-demand type ink-jet printing system, wherein droplets of ink are discharged through a nozzle by heating.

EP 0 834 538 B1

**Patentansprüche**

1. Tinte, umfassend: (i) einen farbgebenden Stoff, (ii) einen Chelatbildner, der sich mit einem Metallion verbindet, wodurch ein wasserlöslicher Komplex gebildet wird, und (iii) Wasser oder eine Mischung aus Wasser und einem wasserlöslichen organischen Lösungsmittel, wobei der Chelatbildner in einer Menge von 1 bis 4 mol pro Mol Metallionen, die in der Tinte enthalten sind, enthalten ist und der pH 6 bis 10 ist.

2. Tinte gemäß Anspruch 1, wobei der farbgebende Stoff ein wasserlöslicher Farbstoff oder Pigment ist.

3. Tinte gemäß Anspruch 1 oder 2, wobei die Temperatur, bei der der wasserlösliche Komplex seine Löslichkeit verliert und in eine unlösliche Substanz umgewandelt wird, nicht geringer als 300°C ist.

4. Tinte gemäß einem der Ansprüche 1 bis 3, wobei im Fall des Erwärmens unter den Bedingungen einer maximalen Oberflächenerwärmungstemperatur von 700°C, einer Periodendauer von 2 kHz und einer Erwärmungszeit von 1 Sekunde der Umwandlungsgrad des wasserlöslichen Komplexes in eine unlösliche Substanz nicht mehr als 24 % ist.

5. Tinte gemäß Anspruch 4, wobei der Umwandlungsgrad nicht mehr als 10 % ist.

6. Tinte gemäß einem der Ansprüche 1 bis 5, wobei im Fall des Erwärmens unter den Bedingungen einer maximalen Oberflächenerwärmungstemperatur von 700°C, einer Periodendauer von 2 kHz und einer Erwärmungszeit von 1 Sekunde der Umwandlungsgrad des wasserlöslichen Komplexes, gebildet durch Verbinden des Chelatbildners mit einem Kalziumion, in eine unlösliche Substanz nicht mehr als 4,0 % ist.

7. Tinte gemäß einem der Ansprüche 1 bis 5, wobei im Fall des Erwärmens unter den Bedingungen einer maximalen Oberflächenerwärmungstemperatur von 700°C, einer Periodendauer von 2 kHz und einer Erwärmungszeit von 1 Sekunde der Umwandlungsgrad des wasserlöslichen Komplexes, gebildet durch Verbinden des Chelatbildners mit einem Eisenion, in eine unlösliche Substanz nicht mehr als 4,0 % ist.

8. Tinte gemäß einem der Ansprüche 1 bis 5, wobei im Fall des Erwärmens unter den Bedingungen einer maximalen Oberflächenerwärmungstemperatur von 700°C, einer Periodendauer von 2 kHz und einer Erwärmungszeit von 1 Sekunde der Umwandlungsgrad des wasserlöslichen Komplexes, gebildet durch Verbinden des Chelatbildners mit einem Magnesiumion, in eine unlösliche Substanz nicht mehr als 4,0 % ist.

9. Tinte gemäß einem der Ansprüche 1 bis 5, wobei im Fall des Erwärmens unter den Bedingungen einer maximalen Oberflächenerwärmungstemperatur von 700°C, einer Periodendauer von 2 kHz und einer Erwärmungszeit von 1 Sekunde der Umwandlungsgrad des wasserlöslichen Komplexes, gebildet durch Verbinden des Chelatbildners mit einem Siliziumion, in eine unlösliche Substanz nicht mehr als 4,0 % ist.

10. Tinte gemäß einem der Ansprüche 1 bis 5, wobei im Fall des Erwärmens unter den Bedingungen einer maximalen Oberflächenerwärmungstemperatur von 700°C, einer Periodendauer von 2 kHz und einer Erwärmungszeit von 1 Sekunde der Umwandlungsgrad des wasserlöslichen Komplexes, gebildet durch Verbinden des Chelatbildners mit einem Manganion, in eine unlösliche Substanz nicht mehr als 4,0 % ist.

11. Tinte gemäß einem der Ansprüche 1 bis 10, wobei der Chelatbildner wenigstens einer ist, ausgewählt aus der Gruppe bestehend aus Ethylendiamintetraessigsäure, Nitrilotriessigsäure, Uracildiessigsäure, 1,10-Phenanthrolin, Glycolsäure, Glycerinsäure, Milchsäure, Weinsäure, Zitronensäure, Mandelsäure, Salicylsäure und Polyphosphorsäure oder ein Salz davon.

12. Tinte gemäß Anspruch 11, wobei der Chelatbildner Ethylendiamintetraessigsäure oder ein Salz davon ist.

13. Ein Druckverfahren, anwendbar auf ein Tintenstrahlsystem vom On-Demand-Typ, das umfaßt: Füllen einer Düse mit einer Tinte gemäß einem der Ansprüche 1 bis 12; kurzzeitiges Erwärmen der Oberfläche eines Heizkopfes, wodurch in der Düse Blasen gebildet werden; und Entnehmen von Tintentropfen durch den Druck der Blasen.

14. Verwendung einer Tinte gemäß einem der Ansprüche 1 bis 12 in einem Tintenstrahldrucksystem vom On-Demand-Typ, wobei Tintentropfen durch eine Düse aufgrund von Erwärmen entnommen werden.

**Revendications**

1.  Encre comprenant : (i) un colorant, (ii) un agent chélatant qui se lie à un ion métallique pour former un complexe soluble dans l'eau et (iii) de l'eau ou un mélange d'eau et d'un solvant organique soluble dans l'eau, dans laquelle l'agent chélatant est contenu en une quantité de 1 à 4 moles par mole d'ions métalliques contenus dans l'encre, et le pH est de 6 à 10.

2.  Encre selon la revendication 1, dans laquelle le colorant est une matière colorante ou un pigment soluble dans l'eau.

3.  Encre selon la revendication 1 ou 2, dans laquelle la température, à laquelle le complexe soluble dans l'eau perd sa solubilité et est converti en une substance insoluble, n'est pas inférieure à 300°C.

4.  Encre selon l'une quelconque des revendications 1 à 3, dans laquelle le taux de conversion du complexe soluble dans l'eau en une substance insoluble est non supérieur à 24 % dans le cas d'un :chauffage dans des conditions de température superficielle de chauffage maximale de 700°C, de fréquence de 2 kHz et de durée de chauffage de 1 seconde.

5.  Encre selon la revendication 4, dans laquelle le taux de conversion n'est pas supérieur à 10 %.

6.  Encre selon l'une quelconque des revendications 1 à 5, dans laquelle le taux de conversion du complexe soluble dans l'eau, formé par liaison de l'agent chélatant avec un ion calcium, en une substance insoluble n'est pas supérieur à 4,0 % dans le cas d'un chauffage dans des conditions de température superficielle de chauffage maximale de 700°C, de fréquence de 2 kHz et de durée de chauffage de 1 seconde.

7.  Encre selon l'une quelconque des revendications 1 à 5, dans laquelle le taux de conversion du complexe soluble dans l'eau, formé par liaison de l'agent chélatant avec un ion fer, en une substance insoluble n'est pas supérieur à 4,0 % dans le cas d'un chauffage dans des conditions de température superficielle de chauffage maximale de 700°C, de fréquence de deux kHz et de durée de chauffage de 1 seconde.

8.  Encre selon l'une quelconque des revendications 1 à 5, dans laquelle le taux de conversion du complexe soluble dans l'eau, formé par liaison de l'agent chélatant avec un ion magnésium, en une substance insoluble n'est pas supérieur à 4,0 % dans le cas d'un chauffage dans des conditions de température superficielle de chauffage maximale de 700°C, de fréquence de 2 kHz et de durée de chauffage de 1 seconde.

9.  Encre selon l'une quelconque des revendications 1 à 5, dans laquelle le taux de conversion du complexe soluble dans l'eau, formé par liaison de l'agent chélatant avec un ion silicium, en une substance insoluble n'est pas supérieur à 4,0 % dans le cas d'un chauffage dans des conditions de température superficielle de chauffage maximale de 700°C, de fréquence de 2 kHz et de durée de chauffage de 1 seconde.

10. Encre selon l'une quelconque des revendications 1 à 5, dans laquelle le taux de conversion du complexe soluble dans l'eau, formé par liaison de l'agent chélatant avec un ion manganèse, en une substance insoluble n'est pas supérieur à 4,0 % dans le cas d'un chauffage dans des conditions de température superficielle de chauffage maximale de 700°C, de fréquence de 2 kHz et de durée de chauffage de 1 seconde.

11. Encre selon l'une quelconque des revendications 1 à 10, dans laquelle l'agent chélatant est au moins un élément du groupe constitué par l'acide éthylène-diaminetétraacétique, l'acide nitrilotriacétique, l'acide uracildiacétique, la 1,10-phénanthroline, l'acide glycolique, l'acide glycérique, l'acide lactique, l'acide tartrique, l'acide citrique, l'acide mandélique, l'acide salicylique et l'acide poly phosphorique, ou un sel de ceux-ci.

12. Encre selon la revendication 11, dans laquelle l'agent chélatant est l'acide éthylènediamine-tétraacétique, ou un sel de celui-ci.

13. Procédé d'impression applicable à un système de jet d'encre à la demande, qui comprend le remplissage d'une buse avec une encre selon l'une quelconque des revendications 1 à 12 ; le chauffage momentané de la surface d'une tête de chauffage pour former des bulles dans la buse ; et la décharge de gouttelettes d'encre par la pression des bulles.

14. Utilisation d'une encre selon l'une quelconque des revendications 1 à 12 dans un système de jet d'encre à la demande, dans laquelle des gouttelettes d'encre sont déchargées par une buse par chauffage.

# Fig. 1

(a)

(b)

(c)

(d)

(e)

(f)

(g)

Fig. 2